# EUROPEAN PATENT APPLICATION

(11) **EP 4 387 026 A1**
(43) Date of publication of application: **19.06.2024**
(21) Application number: 22213482.7
(22) Date of filing: 14.12.2022
(51) Int. Cl.: H02J 1/00, H02J 13/00, F03D 9/19

(54) **WIND POWER GENERATOR WITH HIGHER OUTPUT FREQUENCY**

(71) Applicant: Siemens Gamesa Renewable Energy A/S, 7330 Brande (DK)
(72) Inventor: Lund, Mogens, 6920 Videbaek (DK); Nica, Florin Valentin Traian, 7400 Herning (DK)
(74) Representative: SGRE-Association

(57) **Abstract**

The present invention relates to a wind turbine (1) powering a plant (40) especially a hydrogen production plant, where the wind turbine (1) comprises a generator (10) connected to a wind rotor (5), and where an electrical power system (9) electrically connects the generator (10) to the plant (40), characterized in that, the frequencies of the currents within the electrical power system (9) are not adapted according to a setpoint dictated by a utility power grid.

The present invention further relates to the method to operate the wind turbine (1).

## Description

### FIELD OF THE INVENTION

The invention relates to a wind turbine powering a hydrogen production plant, especially the plant electrolyzer.

More specifically, the invention relates to the power system transforming the generated AC current into a DC current for the hydrogen plant.

### BACKGROUND OF THE INVENTION

It is well known to use wind turbines to power e.g., the electrolyzers of hydrogen production plants. This can either be by dedicated wind turbines with no grid connection, or by dividing the generated power with the plant and the utility grid.

The utility grid usually operates at pre-defined frequencies, typically 50Hz or 60Hz, and when connected to the grid, the wind turbine thus needs to be adapted to generate current at accordingly, independent of fluctuating wind conditions.

To operate at such low frequencies has the disadvantage that the size and weight of the needed magnetic components (i.e., transformer, inductor etc.) are large, leading to an increased complexity and cost of the structure and the foundation of the wind turbine generator, which drives the price up.

Wind turbines adapted to produce only hydrogen with no grid connection, do not have the same requirement to generate power at a specific frequency.

The object of the present invention is for a dedicated hydrogen producing wind turbine, operating without grid connection, to design the electrical power system more optimally by running the system at a higher frequency.

The more optimal design of electrical power system in the present refers to a higher efficiency, lower component mass, lower component volume and lower component cost.

### SUMMARY OF THE INVENTION

The object of the invention is achieved by the independent claims. The dependent claims describe advantageous developments and modifications of the invention.

This includes introducing a wind turbine powering a plant where the wind turbine comprises a generator connected to a wind rotor, and where an electric power system electrically connects the generator to the plant, wherein the frequencies of the currents within the electrical power system are not adapted according to a setpoint dictated by a utility power grid.

The electrical power system may operate at significantly higher frequencies than wind turbines adapted to feed electrical power to utility power grids. It thus can operate at significantly higher frequencies than 50 Hz, or 60 Hz.

The electrical power system may operate with AC currents with at least two times, or five times or ten times higher frequencies than 50 or 60 Hz.

The electrical power system is adapted to deliver a DC current to the plant, through an optimized wind turbine configuration.

The frequencies of the currents within the power system may be independent of the plant.

This ensures the present invention with advantage can be used for powering plants not connected to the power grid, and not operating at specified current frequencies.

The electrical power system may include two transformers positioned in series, to transfer electrical energy efficiently and reliably from the wind turbine nacelle, where electrical energy is produced, to the wind turbine tower bottom, where the plant consuming electrical energy can be located.

The electrical power system may comprise a back-to-back AC converter including an AC to DC converter, e.g., an active or passive rectifier and an inverter, where the back-to-back AC converter is positioned between the generator and a transformer. The power system may further comprise an AC to DC converter (e.g., active or passive rectifier) positioned between the transformer and the plant.

Two transformers may be positioned intermediate to the DC to AC converter of the back-to-back AC converter and an AC to DC converter adapted to be positioned between the transformers and the plant.

The power system may comprise a direct AC/AC converter positioned between the generator and a frequency transformer.

Two transformers may be positioned intermediate the direct AC/AC converter and an AC to DC converter adapted to be positioned between the transformers and the plant.

The present invention further introduces a method to operate a wind turbine powering a hydrogen producing plant, where the wind turbine comprises a generator connected to a wind rotor, and where an electrical power system electrically connects the generator to a plant, wherein the method includes for the electric power system not to adapt any current frequency setpoint dictated by a utility power grid.

The method may be used on the wind turbine according to any of the embodiments.

The present invention could with advantage be used on plant for hydrogen production plant where the powering current frequency is irrelevant.

### BRIEF DESCRIPTION OF THE DRAWINGS

Embodiments of the invention are now described, by way of example only, with reference to the accompanying drawings, of which:
- Figure 1: shows a general wind turbine powering hydrogen production plants;
- Figure 2: shows a grid connected power system connecting a generator of a wind turbine to the utility grid to supply it with the correct frequency AC current;
- Figures 3: and 4 show two embodiments of the present invention where the generator placed in the nacelle is connected to a hydrogen production plant, optionally placed at the tower bottom, by a power system forming power system optionally designed to operate at higher frequencies enabling optimization of the WTG design.
- Figure 5: shows an embodiment where the invention is introduced to a set of parallel and independent hydrogen production plants.
- Figure 6: shows a flow chart of the method according to the present invention.

The illustration in the drawings is in schematic form. It is noted that in different figures, similar or identical elements may be provided with the same reference signs.

### DESCRIPTION OF THE DRAWINGS

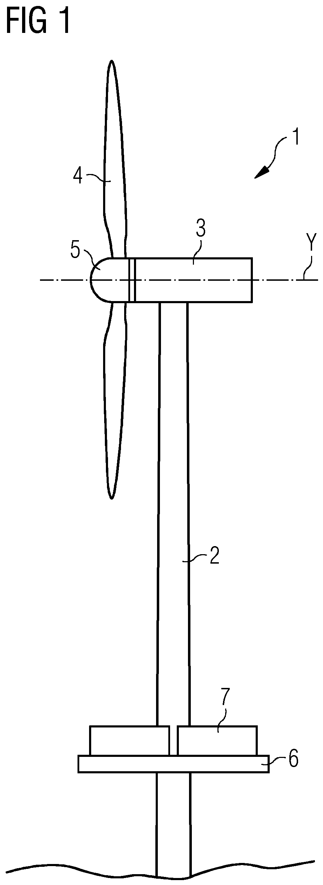

**Figure 1** shows an embodiment wind turbine 1 positioned in the water, such as the ocean. The wind turbine 1 comprises a tower 2 mounted on a non-depicted fundament. A nacelle 3 is arranged on top of the tower 2. The wind turbine 1 further comprises a wind rotor 5 having two, three or more blades 4 (in the perspective of Figure 1 only two blades 4 are visible). The wind rotor 5 is rotatable around a longitudinal rotation axis Y.

In the illustrated embodiment a platform 6 is positioned at the tower 2. The position of the platform 6 at the tower 2 could be such that it is generally above water despite waves and tides.

The platform 6 is adapted for containers 7 to be positioned and optionally fixed on its surface. In a non-exclusive manner the containers could comprise operational parts such as hydrogen production plant, but could be other systems, e.g., CO2 extraction machines, solar heating plants etc., in the following exampled as hydrogen producing plants each container including electrolyzers etc.

Alternatively, or additionally, the operational parts could be placed remote from the wind turbine 1.

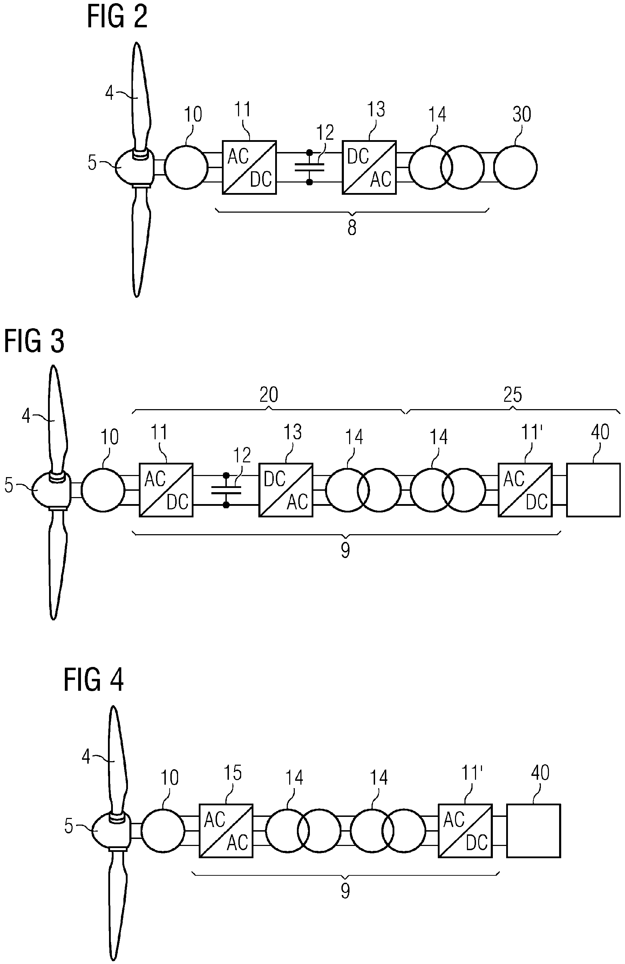

**Figure 2** schematically shows the principle of construction of an electrical power system forming a grid connected power system 8 of a wind turbine 1. A generator 10 is connected to the wind rotor 5 such that a rotation of the wind rotor 5 causes a rotor in the generator 10 to rotate, and to induce power in the stator coils of the generator 10.

Between the generator and the utility grid 30 is positioned a grid connected power system 8 which in the illustrated embodiment comprises a variable-voltage DC link with a capacitor 12 feed by the rectified voltage pulses of the generator, and an inverter 13, for example a force-commutated inverter, to create a defined alternating output voltage. A transformer 14 of the generator-utility grid interface brings the alternating voltage to a suitable level for feeding the energy into the utility grid 30.

The utility grid 30 usually operates at 50Hz or 60Hz, whereas the generator generates current at variable frequencies in dependence of the fluctuating wind conditions. The electrical grid connected power system 8 including transformer 14 thus needs to be able to deliver a substantially constant output frequency with a setpoint frequency corresponding to the grid 30 requirements.

Operation at a low frequency has the disadvantage that the size and weight of the magnetic components (i.e., transformer 14, inductor etc.) are large, leading to an increased complexity and cost of the structure and the foundation of the wind turbine generator 10, which drives the price up.
For wind turbines adapted solely for powering plants, such as for hydrogen production, however there are not the same requirement to generate power at a specific frequency.

The present invention aims to make a cheaper, smaller, and lighter system adapted to power a plant, such as for hydrogen production.

The basic solution is to design the electrical power system to operate without adapting to the setpoint frequency, such as the required frequency of a standard utility grid 30 (e.g., 50 or 60 Hz).

**Figure 3** illustrates a first embodiment electric power system 9 where it is utilized that the electrolyzer of the hydrogen plant 40 uses DC-current. Thus, rather than being connected to the utility grid 30, the electrical power system 9 connects the generator 10 to a hydrogen plant 40. The illustrated setup electrical power system 9 embodiment comprises a back-to-back AC converter including an AC to DC converter 11 (e.g., passive, active rectifier to change the generated AC current into a DC current) and an inverter 13 (to change the DC current back into an AC current) operating at different frequencies on the two AC sides.

Two high frequency transformers 14', 14" (HFT) positioned in series are adapted to operate at frequencies significantly higher than the 50-60 Hz in the utility grid 30, such as at least 2 times, or 5 times or 10 times higher. This enables the use of significantly lighter, smaller and cheaper transformers 14', 14".

Between the transformers 14', 14" and a connected hydrogen plant 40 may be positioned a further an AC to DC converter 11' (e.g., passive or active rectifier) to change the AC current from the transformer 14" into the correct DC current and voltage to be supplied to the connected hydrogen plant 40) .

The power system 9 first parts, such as the AC to DC converter 11 close to the generator 10, the DC link 12, inverter 13 and one transformer 14, in an embodiment all are in the nacelle 3 of the wind turbine. The second transformer 14 and the further AC to DC converter 11' may be located away from or outside the nacelle 3, such as at a platform e.g., at the tower 2, e.g. at the tower 2 bottom.

Introducing two transformers 14' 14" enables the reduction of the number of cables, and therefore reduces the complexity and cost, while improving efficiency and reliability.

The two transformers 14', 14" thus are positioned in series to efficiently and reliably transport electrical power from the nacelle 3 down to e.g., a wind turbine 1 platform

**Figure 4** illustrates a second embodiment electric power system 9, where the back-to-back AC converter of figure 3 of the electric power system 9 is replaced by a direct AC/AC converter 15 between generator and a first high frequency transformer 14'. The AC/AC converter 15 operates at different frequencies on the two AC side.

Again, two high frequency transformers 14', 14" is positioned, in this embodiment between the direct AC/AC converter 15 and an AC to DC converter 11'. As for figure 3 the AC to DC converter 11' is positioned between the transformers 14" and a connected hydrogen plant 40 to change the AC current from the transformer 14" into the correct DC current and voltage to be supplied to the connected hydrogen plant 40.

As for the embodiment of fig. 3 some parts are positioned in the nacelle 3, such as the AC/AC direct converter 15 and one transformer 14. Again, the second transformer 14 and the further AC to DC converter 11' may located at a wind turbine 1 platform e.g., at the tower 2 bottom.

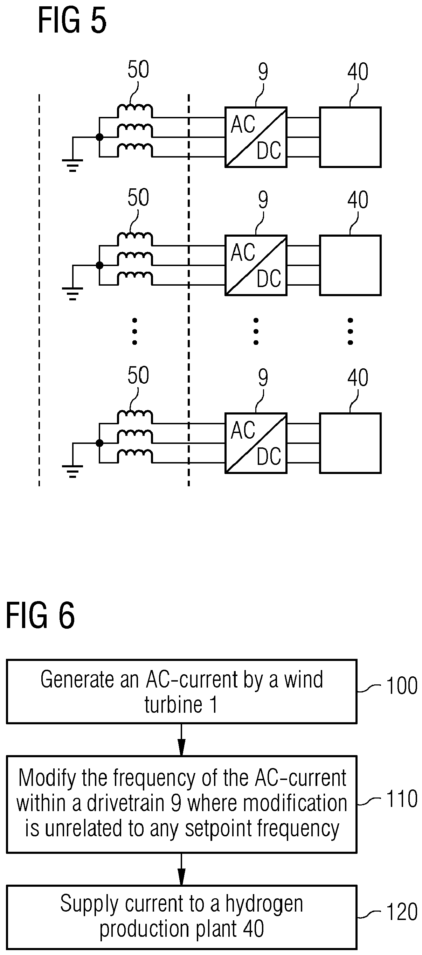

**Figure 5** illustrates how the embodiment architectures of figure 3 and 4 can be modularized, to supply multiple electrolyzers in parallel hydrogen plants 40 independently.

In the illustration generator-utility grid interface 9 of any version and embodiment architecture is illustrated as a single combined box comprising the means to transfer the generated AC current into a suitable DC current.

Three phase coils 50 of the generator 10 are seen with the power system 9 connecting them to the hydrogen plants 40.

**Figure 6** illustrates the method to operate a wind turbine (1) powering a hydrogen production plant (40).

In a first step 100 an AC-current is generated by a wind turbine 1.

In a second step 110 modify the frequency of the AC-current within a power system 9 where modification is unrelated to any setpoint frequency dictated by a utility power grid.

In a third step 120 supply output current from the power system to the hydrogen production plant 40.

Although the present invention has been described in detail with reference to the preferred embodiment, it is to be understood that the present invention is not limited by the disclosed examples, and that numerous additional modifications and variations could be made thereto by a person skilled in the art without departing from the scope of the invention.

## Claims

1. Wind turbine (1) powering a plant (40) where the wind turbine (1) comprises a generator (10) connected to a wind rotor (5), and where an electrical power system (9) electrically connects the generator (10) to the plant (40), **characterized in that**, the frequencies of the currents within the electrical power system (9) are not adapted according to a setpoint dictated by a utility power grid.

2. Wind turbine (1) according to claim 1, wherein the frequencies of the currents within the electrical power system (9) are independent of the plant (40).

3. Wind turbine (1) according to claim 1 or 2, wherein the electrical power system (9) operates with AC currents with significantly higher frequencies than in the standard power grids (30).

4. Wind turbine (1) according to claim 3, wherein the electrical power system (9) operates with AC currents with significantly higher frequencies than 50 or 60 Hz.

5. Wind turbine (1) according to claim 4, wherein the electrical power system (9) operates with AC currents with at least two times, or five times or ten times higher frequencies than 50 or 60 Hz.

6. Wind turbine (1) according to any of the preceding claims, wherein the electrical power system (9) is adapted to deliver a DC current output.

7. Wind turbine (1) according to any of the preceding claims, wherein the electrical power system (9) includes two transformers (14', 14") positioned in series.

8. Wind turbine (1) according to any of the preceding claims, wherein the power system (9) comprises a back-to-back AC converter including an AC to DC converter (11) and an inverter (13), where the back-to-back AC converter is positioned between the generator (10) and a transformer (14'), the electrical power system (9) further comprising an AC to DC converter (11') positioned between the transformer (14") and the plant (40).

9. Wind turbine (1) according to 7 and 8, wherein two transformers (14', 14") are positioned intermediate the DC to AC converter (11) of the back-to-back AC converter and an AC to DC converter (11') adapted to be positioned between the transformers (14") and the plant (40).

10. Wind turbine (1) according to any of the preceding claims 1-8, wherein the electrical power system (9) comprises a direct AC/AC converter (15) positioned between the generator (10) and a transformer (14').

11. Wind turbine (1) according to 9 and 10, wherein two transformers (14', 14") are positioned intermediate the direct AC/AC converter (15) and an AC to DC converter (11') adapted to be positioned between the transformers (14) and the plant (40).

12. Method to operate a wind turbine (1) powering a hydrogen producing plant (40), where the wind turbine (1) comprises a generator (10) connected to a wind rotor (5), and where an electrical power system (9) electrically connects the generator (10) to a plant (40), **characterized in that**, the method includes for the electric power system (9) not to adapt any current frequency setpoint dictated by a utility power grid.

13. Method according to claim 12 and used on the wind turbine according to any of claims 1-11.

14. Wind turbine (1) or method to operate the wind turbine (1) according to any of the preceding claims, wherein the plant (40) is a hydrogen production plant (40).
